# EUROPÄISCHE PATENTANMELDUNG

(11) **EP 3 255 959 A1**
(43) Veröffentlichungstag der Anmeldung: **13.12.2017**
(21) Anmeldenummer: 17172195.4
(22) Anmeldetag: 22.05.2017
(51) Int. Cl.: H05B 33/08, B60Q 1/14, F21S 8/10

(54) **KRAFTFAHRZEUG-BELEUCHTUNGSEINRICHTUNG**

(30) Priorität: 07.06.2016 AT 505232016
(71) Anmelder: ZKW Group GmbH, 3250 Wieselburg (AT)
(72) Erfinder: MITTERLEHNER, Thomas, 3240 Mank (AT); KOLLER, Jan, 1120 Wien (AT); SCHANTL, Patrik, 2604 Theresienfeld (AT)
(74) Vertreter: Patentanwaltskanzlei Matschnig & Forsthuber OG

(57) **Zusammenfassung**

Eine Kraftfahrzeug-Beleuchtungseinrichtung mit zumindest zwei Halbleiterlichtquellen zum Erzeugen einer Lichtverteilung, bei welchem eine der Beleuchtungseinrichtung zugeordnete Schaltungsanordnung zum Ansteuern von zumindest zwei Modulationszweigen (Z₁...Zₙ) für Halbleiterlichtquellen (LD1....LDn) vorgesehen ist, wobei jeder Zweig zumindest eine Halbleiterlichtquelle aufweist, die in Serie mit einer Modulationsstufe (11₁, 11₂, ...11ₙ) liegt, welche den Strom im jeweiligen Zweig moduliert, und die Zweige parallel an der Ausgangsspannung (U_{A}) einer gemeinsamen, elektronisch regelbaren Spannungsquelle (10) liegen, und eine Auswerteschaltung (12₁, 12₂,...12ₙ) vorgesehen ist, welcher der Spannungsabfall (Δuₓ₁, ..... Δuₓₙ) an der Modulationsstufe jedes Zweiges zugeführt ist, wobei die Auswerteschaltung dazu eingerichtet ist, den aktuellen Minimalwert (Δuₓₘᵢₙ) des Spannungsabfalls (Δuₓ₁,.... Δuₓₙ) einer Regelstufe (13) als Istwert zuzuführen, wobei der Regelstufe als Sollwert der minimal benötigte Spannungsabfall (Δuₛₒₗₗ) vorgegeben ist und das Ausgangssignal (S_{A}) der Regelstufe als Stellgröße für die Spannungsregelung der regelbaren Spannungsquelle zugeführt ist, wobei die Regelstufe (13) dazu eingerichtet ist, bei Unterschreiten eines vorgegebenen unteren Grenzwertes des Spannungsabfalls (Δuₓ₁, ..... Δuₓₙ) an einer Modulationsstufe (11₁, 11_{2,} ...11ₙ) ein, auf eine offene Last hinweisendes Fehlersignal abzugeben.

## Beschreibung

Die Erfindung bezieht sich auf eine Kraftfahrzeug-Beleuchtungseinrichtung mit zumindest zwei Halbleiterlichtquellen zum Erzeugen einer Lichtverteilung, bei welchem eine der Beleuchtungseinrichtung zugeordnete Schaltungsanordnung zum Ansteuern von zumindest zwei Modulationszweigen für Halbleiterlichtquellen vorgesehen ist, wobei jeder Zweig zumindest eine Halbleiterlichtquelle aufweist, die in Serie mit einer Modulationsstufe liegt, welche den Strom im jeweiligen Zweig moduliert, und die Zweige parallel an der Ausgangsspannung einer gemeinsamen, elektronisch regelbaren Spannungsquelle liegen.

Bei der Entwicklung der gegenwärtigen Scheinwerfersysteme steht immer mehr der Wunsch im Vordergrund, ein möglichst hochauflösendes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im hier verwendeten Sinn einer Projektion auf eine vertikale Fläche entsprechend der einschlägigen Normen, die sich auf die KFZ-Beleuchtungstechnik beziehen. Oft spricht man an Stelle von "Fahrbahn" auch von "Verkehrsraum".

Entsprechend dem genannten Bedürfnis sind unterschiedliche Scheinwerfersysteme entwickelt worden, wie insbesondere mit scannenden, modulierten Laserstrahlen arbeitende Scheinwerfer, wobei lichttechnischer Ausgangspunkt zumindest eine Laserlichtquelle ist, die einen Laserstrahl abgibt, und welcher eine Laseransteuerung zugeordnet ist, die zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" ist dabei zu verstehen, dass die Intensität der Laserlichtquelle geändert werden kann, sei es kontinuierlich oder im Sinne eines Ein- und Ausschaltens gepulst. Wesentlich ist, dass die Lichtleistung analog dynamisch geändert werden kann, je nachdem, an welcher Winkelposition ein den Laserstrahl ablenkender Spiegel steht. Zusätzlich gibt es noch die Möglichkeit des Ein- und Ausschaltens für eine gewisse Zeit, um definierte Stellen nicht zu beleuchten oder auszublenden. Die Ansteuerung der Laserlichtquellen und der zur Strahlablenkung dienenden Mikrospiegel erfolgt über eine Recheneinheit, auch kurz ECU (Electronic oder Engine Control Unit) genannt. Ein Beispiel eines dynamischen Ansteuerungskonzepts zur Erzeugung eines Bildes durch einen scannenden Laserstrahl ist etwa in dem Dokument AT 514633 der Anmelderin beschrieben.

Unter dem Begriff "Scheinwerfer" ist im Zusammenhang mit der vorliegenden Erfindung nicht nur ein kompletter Fahrzeugscheinwerfer zu verstehen sondern ebenso eine Beleuchtungseinheit, welche beispielsweise zusammen mit anderen Beleuchtungseinheiten Teil eines Scheinwerfers bilden kann.

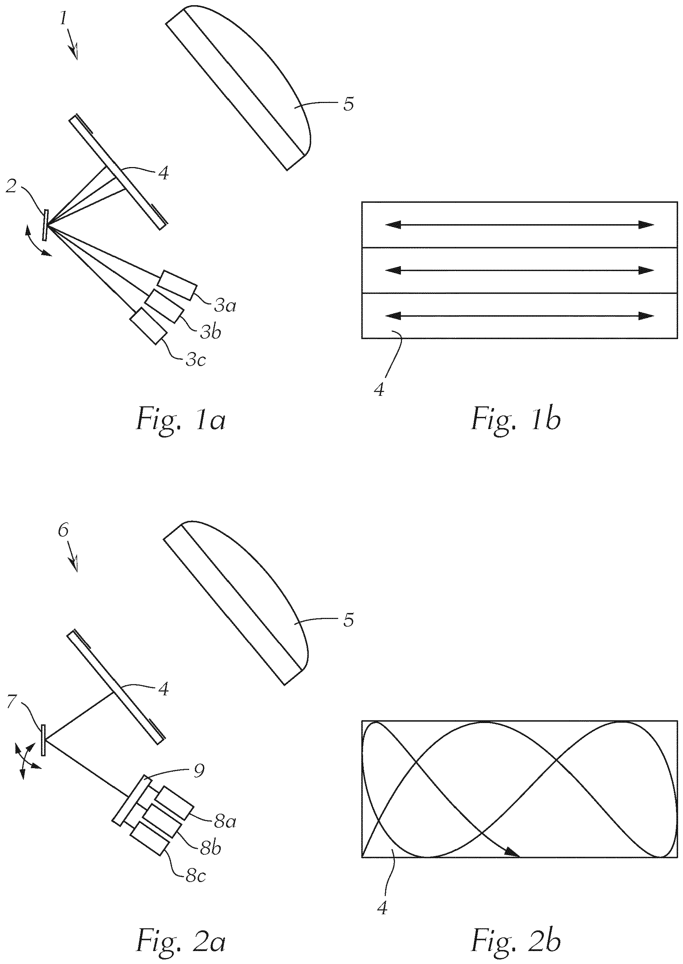

In Hinblick auf die geforderten Lichtleistung bzw. das gewünschte Lichtmuster sind meist mehrere Laserlichtquellen erforderlich, wobei die dazu zum Einsatz kommenden Systeme an Hand der Fig. 1a bis Fig. 2b kurz erläutert werden sollen.

Fig. **1a** zeigt ein Laserscansystem 1, bei dem Laserstrahlen von n Laserlichtquellen über ein Ablenkelement 2 ablenkt werden, wobei zumindest eine Laserdiode, gezeigt sind drei Laserdioden 3a, 3b, 3c, für den Betrieb notwendig ist. In der beispielhaft gezeigten Ausführung lenkt das Ablenkelement 2, welches beispielsweise als Mikroscanner mit einem Mikrospiegel ausgebildet sein kann, die Laserstrahlen der zumindest einen Laserlichtquelle in einer Richtung ab. Beispielsweise, wie in Fig. **1b** durch Pfeile angedeutet, in horizontaler Richtung, wobei schematisch die Fläche auf einem Konversionselement 4 gezeigt ist, über welche der oder die Laserstrahlen scannend ein Leuchtbild schreiben, das über ein Projektionsmittel 5 dann als Leuchtbild auf die Straße projiziert wird.

Analog dazu zeigen Fig. 2a und Fig. 2b ein Laserscansystem 6 mit einem Ablenkelement 7, welches einen Lichtstrahl in zwei zueinander orthogonalen Richtungen ablenken kann. Hier werden im Gegensatz zur Ausführung nach Fig. 1a die Laserstrahlen dreier Laserdioden 8a, 8b, 8c mit Hilfe eines Optiksystems 9 zu einem Strahl gewünschten Querschnitts fokussiert und durch das Ablenkelement 7 auf das Konversionselement 4 periodisch um zwei Achsen abgelenkt. In Fig. 2b ist eine Lissajous-Figur gezeigt, die man beispielsweise als Ergebnis einer solchen Ablenkung in zwei Richtungen erhält.

Die beiden gezeigten Systeme 1 und 6 sind zwar repräsentative Beispiele, die Ausgangspunkt der Erfindung sein können, doch ist diese Erfindung nicht auf die Verwendung solcher Systeme eingeschränkt. Denn es sind auch andere Systeme möglich, welche Laserlicht scannend direkt auf die Straße projizieren, beispielsweise RGB-Systeme.

Die Figuren zeigen nur die wesentlichen Bestandteile der Systeme, welche Grundlage der Erfindung sein können. Es sollte klar sein, dass eine Kraftfahrzeug-Beleuchtungseinrichtung, insbesondere ein Scheinwerfer, viele weitere Elemente für einen ordnungsgemäßen Betrieb benötigt, beispielsweise Kühlmittel oder optische Elemente, welche beispielsweise das Laserlicht in der Intensitätsverteilung und/oder Querschnittsform beeinflussen, oder Verstelleinrichtungen und Halterungen, welche der Übersichtlichkeit halber nicht gezeigt sind.

Wesentlich ist, dass die vorliegende Erfindung bei allen Systemen Anwendung finden kann, welche mehr als eine Halbleiterlichtquelle, insbesondere eine Laserlichtdiode, verwenden, da eben diese Mehrzahl an Lichtquellen entsprechende Anforderungen an die Ansteuerung stellt.

Um die auftretenden Verlustleistungen gering zu halten verwendet man bei bekannten Lösungen mit paralleler Steuerung bzw. Modulation von Lichtquellen oft getrennte Schaltwandler für jeden Zweig, wobei die Ausgangsspannung jedes Schaltwandlers individuell geregelt werden kann. Dieses Konzept ist zwar hinsichtlich der Minimierung der Verlustleistung sehr wirkungsvoll, doch ist der Aufwand für eine größere Anzahl von schaltwandlern bzw. geregelten Spannungsquellen naturgemäß auch sehr hoch.

Eine Aufgabe der Erfindung liegt in der Schaffung einer Kraftfahrzeug-Beleuchtungseinrichtung mit mehreren modulierbaren Zweigen, die je aus einer oder mehreren Halbleiterlichtquellen, wie Laserdioden oder LEDs bestehen, bei welcher eine Spannungsüberwachung und eine entsprechende Ansteuerung einer einzigen geregelten Spannungsquelle eine Verringerung der Verlustleistung ermöglicht, wobei auch fehlerhafte Zustände, wie offene Last oder Kurzschluss erkannt und berücksichtigt werden können.

Diese Aufgabe wird mit einer Kraftfahrzeug-Beleuchtungseinrichtung der eingangs genannten Art gelöst, bei welcher erfindungsgemäß eine Auswerteschaltung vorgesehen ist, welcher der Spannungsabfall an der Modulationsstufe jedes Zweiges zugeführt ist, wobei die Auswerteschaltung dazu eingerichtet ist, den aktuellen Minimalwert des Spannungsabfalls einer Regelstufe als Istwert zuzuführen, wobei der Regelstufe als Sollwert der minimal benötigte Spannungsabfall vorgegeben ist und das Ausgangssignal der Regelstufe als Stellgröße für die Spannungsregelung der regelbaren Spannungsquelle zugeführt ist.

Dank der Erfindung kann nicht nur die Verlustleistung auf einfache Weise gering gehalten werden, sondern es ist auch die Möglichkeit gegeben eine Leerlaufsituationen sicher zu beherrschen.

Eine einfach zu realisierende Ausführung der Erfindung zeichnet sich dadurch aus, dass jede Modulationsstufe als gesteuerter Linearregler mit einem Transistor ausgebildet ist, dessen Eingang je von einem Operationsverstärker angesteuert ist, wobei einem ersten Eingang jedes Operationsverstärkers das Signal eines in dem betreffenden Zweig liegenden Stromsensors und einem zweiten Eingang des Operationsverstärkers ein Modulationssignal zugeführt ist.

In vorteilhafter Weise besteht die Auswerteschaltung aus einer Anzahl an Dioden, deren Anzahl der Anzahl der Modulationsstufen entspricht, wobei die Kathoden der jeweiligen Dioden zwischen den Laserdioden und den Modulationsstufen im jeweiligen Zweig angeschlossen sind und den Anoden der Dioden über einen gemeinsamen Pull-Up Widerstand eine Hilfsspannung zugeführt ist und die Anoden gemeinsam mit einem Kondensator auf Masse geschaltet sind.

Eine kostengünstige Variante sieht vor, dass die Hilfsspannung durch die Ausgangsspannung der regelbaren Spannungsquelle gebildet wird.

In Hinblick auf die Beherrschung von Leerlaufsituationen ist es vorteilhaft, wenn die Regelstufe dazu eingerichtet ist, bei Unterschreiten eines vorgegebenen unteren Grenzwertes des Spannungsabfalls an einer Modulationsstufe ein auf eine offene Last hinweisendes Fehlersignal abzugeben. Dabei ist es sinnvoll, dass das Fehlersignal der regelbaren Spannungsquelle als Abschaltsignal für die Ausgangsspannung zugeführt ist.

Bei einer praxisgerechten Ausführung ist der Transistor in zweckmäßiger Weise ein MOSFET.

Praxisbezogen ist es günstig, wenn die elektronisch regelbare Spannungsquelle ein DC/DC-Konverter ist.

Auch ist es in vielen Fällen vorteilhaft, wenn die zumindest zwei Halbleiterlichtquellen Laserdioden sind.

Die Erfindung ist im Folgenden unter Bezugnahme auf die Zeichnungen näher erläutert. In diesen zeigen:
Fig. 1a und 1b ein Laserscansystem, wie es auch aus dem Stand der Technik bekannt ist, mit drei Lichtquellen und einen um eine Achse verschwenkbaren Ablenkelement,
Fig. 2a und 12b ein Laserscansystem, wie es auch aus dem Stand der Technik bekannt ist, mit drei Lichtquellen und einen um zwei Achsen verschwenkbaren Ablenkelement,
Fig. 3 in einem Blockschaltbild eine Ausführungsform einer Schaltungsanordnung zum Ansteuern mehrerer Halbleiterlichtquellen einer erfindungsgemäßen Kraftfahrzeug-Beleuchtungseinrichtung,
Fig. 4 mehr detailliert die Speisung und Modulation mehrerer Halbleiterlichtquellen unter Weglassung der Auswerteschaltung und der Regelstufe,
Fig. 5 Details der Ansteuerung des Transistors einer Modulationsstufe und
Fig. 6 eine mögliche Auswerteschaltung mit nachgeschalteter Regelstufe.

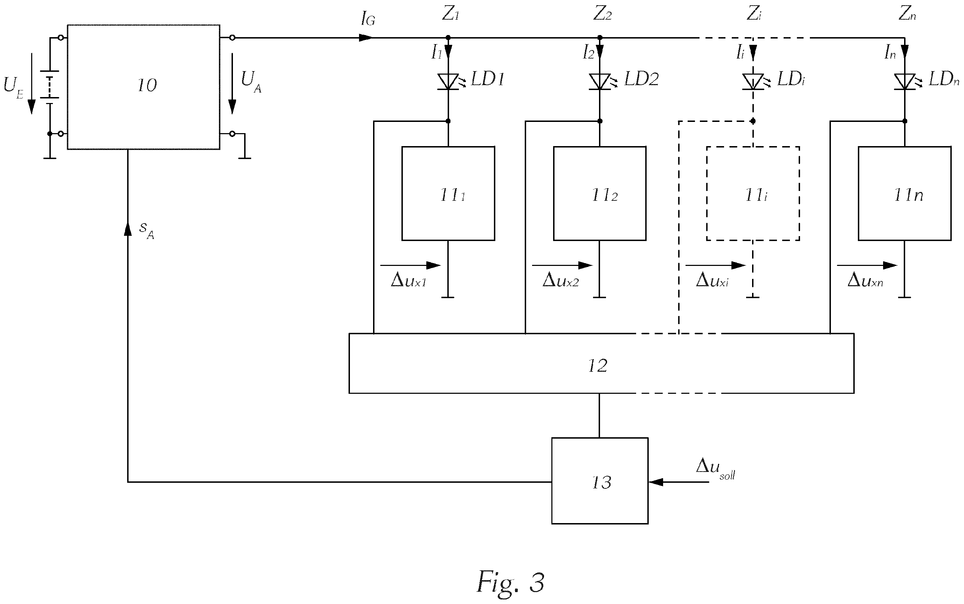

Das Blockschaltbild nach Fig. 3 zeigt in schematischer und vereinfachter Form die wesentlichen Elemente der Ansteuerung einer erfindungsgemäßen Kraftfahrzeug-Beleuchtungseinrichtung. Eine elektronisch regelbare Spannungsquelle 10, hier ein DC/DC-Konverter, erzeugt aus einer vom Fahrzeug bereitgestellten Versorgungsspannung U_{E} eine Ausgangsspannung U_{A}, die zur Speisung mehrerer Zweige Z₁...Zₙ dient, welche je zumindest eine Laserdiode LD1, LD2, ...LDn aufweisen. Es sollte klar sein, dass, obwohl in der Zeichnung nur je eine Laserdiode pro Zweig dargestellt ist, jeder Zweig auch mehrere Laserdioden, insbesondere in Serienschaltung, enthalten kann. Der Strom I₁....Iₙ in jedem Strang wird mit Hilfe von Modulationsstufen 11₁, 11₂, ...11ₙ moduliert, der Gesamtstrom, welchen die Spannungsquelle 10 liefert, ist mit I_{G} bezeichnet.

Eine Modulation ist notwendig, um die Leistung der Laserdioden LD₁, LD₂, ...LDₙ individuell ändern zu können und deren Strahlen zu einem gewünschten Leuchtbild auf einem Konversionselement bzw. Lichtbild auf der Straße zu formen, wobei gesetzeskonforme Mindestwerte und Maximalwerte eingehalten werden müssen, und um ein Ausblenden, also ein Dimmen, bis zu 0% der maximalen Lichtleistung realisieren zu können. Ebenso können andere Funktionen eine individuelle Modulation voraussetzen, wie zum Beispiel Informationsdarstellungen oder gezielte Objektbeleuchtungsfunktionen. Die Modulationfrequenzen sind im Gegensatz zur Schaltfrequenz des Spannungswandlers 10 meist viel höher und liegen typischerweise im Bereich von 200 kHz bis hin zu mehreren MHz.

An jeder dieser Modulationsstufen 11₁, 11₂, ...11ₙ tritt ein Spannungsabfall Δuₓ₁, .....Δuₓₙ auf, der einerseits für eine korrekte Funktion einen Mindestwert nicht unterschreiten darf und der andererseits auch nicht unnötig hoch sein soll, da letzteres höhere Verlustleistungen nach sich ziehen würde. Um den jeweiligen Spannungsabfall detektieren zu können, ist im vorliegenden Beispiel allen Modulationsstufen eine Auswerteschaltung 12zugeordnet, welcher der entsprechende Spannungsabfall Δuₓ₁, ..... Δuₓₙ an jeder Modulationsstufen 11₁, 11₂, ...11ₙ zugeführt ist.

Die Auswerteschaltung 12 ist dazu eingerichtet, den aktuellen Minimalwert Δuₓᵢₘᵢₙ des Spannungsabfalls einer Regelstufe 13 als Istwert zuzuführen, wobei der Regelstufe als Sollwert ein minimal benötigter Spannungsabfall Δuₛₒₗₗ vorgegeben ist und das Ausgangssignal der Regelstufe 13 als Stellgröße für die Spannungsregelung der regelbaren Spannungsquelle zugeführt ist. Die Regelstufe 13 liefert ihrerseits ein Ausgangssignal s_{A} als Stellgröße an die elektronisch regelbare Spannungsquelle 10. Auf diese Weise wird eine Anpassung der Ausgangsspannung U_{A} an die an den Modulationsstufen 11₁, 11₂, ...11ₙ abfallenden Spannungen Δuₓ₁, .....Δuₓₙ ermöglicht. In erster Linie kann damit die Verlustleistung auf ein Minimum reduziert werden, da eine Reduzierung der Ausgangsspannung U_{A} der Spannungsquelle 10 auf die für die korrekte Funktion notwendige Mindestspannung die Verlustleistung an allen Modulationsstufen 11₁, 11₂, ...11ₙ reduziert, ohne deren Funktionstüchtigkeit zu mindern.

Dieser minimal benötigte Spannungsabfall Δuₛₒₗₗ kann unterschiedlich sein, z.B. in Abhängigkeit von Herstellertoleranzen etc., jedoch wird man in der Praxis einen Wert definieren, unter dem keine der Modulationsstufen 11₁, 11₂, ...11ₙ betrieben werden darf. Dieser Wert wird der Regelstufe 13 zugeführt, beispielsweise als feste Referenzspannung, falls eine Hardware Lösung gewählt wird. Bei einer integrierten Lösung mit einem Mikrocontroller und entsprechender Software wird ein entsprechender Wert für den Spannungsabfall Δuₛₒₗₗ ein eingespeicherter Wert sein. Das Ausgangssignal s_{A} der Regelstufe 13 kann die Spannungsquelle 10 veranlassen, ihre Ausgangsspannung U_{A} anzuheben und damit den Spannungsabfall an den Modulationsstufen zu erhöhen, falls dieser zu gering ist.

Die weiter unten näher beschriebenen Auswerteschaltung 12 stellt somit ein Signal für die Regelstufe 13 bereit, die eine von den Spannungsabfällen an den Modulationsstufen 11₁, 11₂, ...11ₙ abhängige Rückführgröße, eben das Ausgangssignal s_{A} für die Spannungsquelle 10 bereitstellt und somit die von ihr erzeugte Ausgangsspannung U_{A} beeinflusst.

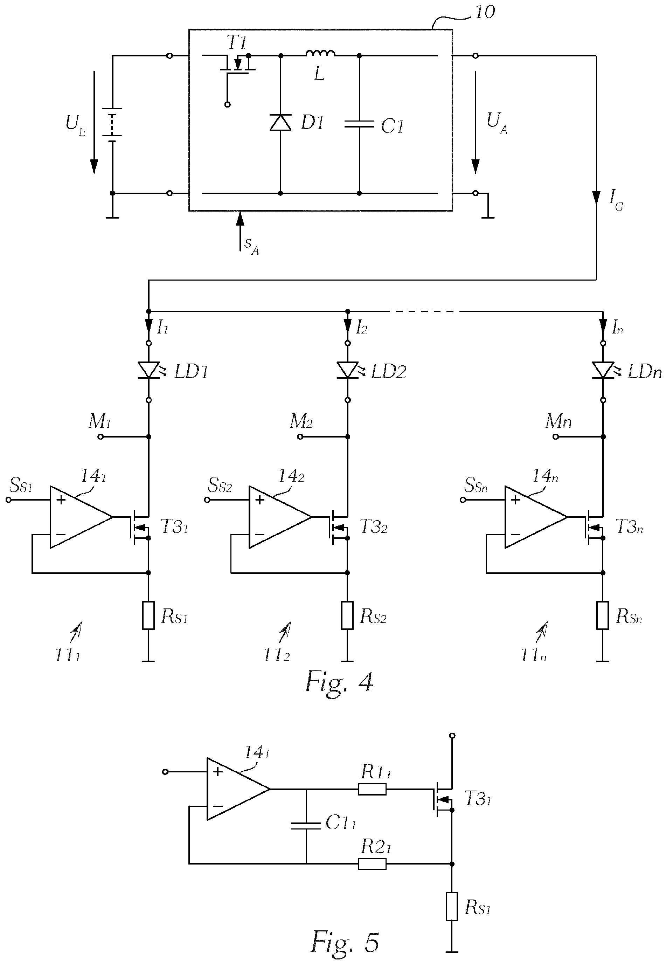

Fig. 4 zeigt eine beispielhafte Ausführung, wobei die Spannungsquelle 10 als DC/DC-Abwärtswandler und die Modulationsstufen 11₁, 11₂, ...11ₙ als gesteuerte Linearregler ausgebildet sind. Die Spannungsquelle 10, somit der DC/DC-Wandler, weist als wesentliche Bauteile in bekannter Weise einen gesteuerten Schalter T1, eine Diode D1, eine Längsinduktivität L sowie einen Speicherkondensator C1 auf; die Modulationsstufen 11₁,11_{2,} ...11ₙ bestehen aus je einem Operationsverstärker 14₁, 14₂...14ₙ, von welchen jeder eine Stromregelschleife mit einem MOSFET T3₁, T3₂,...T3ₙ, beispielsweise einem n-Kanal MOSFET bildet, der abhängig vom Spannungsabfall an je einem Stromsensor R_{S1}, R_{S2},... R_{Sn}, der im vorliegenden Fall als Widerstand ausgebildet ist und einem Modulationssignal S_{S1}....S_{S1} bzw. einem Referenzsignal, welches am zweiten Eingang des Operationsverstärkers 14₁, 14₂...14ₙ anliegt, gesteuert wird und der so den Stromfluss im jeweiligen Zweig Z₁...Zₙ beeinflusst. Das am zweiten Eingang anliegende Modulationssignal S_{S1}....S_{Sn} kann beispielsweise von einer Steuerung stammen, die fahrzeugseitige Signale, wie zum Beispiel Kamerasignale und auch scheinwerferseitige Signale, wie zum Beispiel Mikrospiegelsynchronisationssignale, verarbeitet. Möglich ist auch eine Steuerung über die Regelstufe 13, sollte diese als Mikrocontroller ausgeführt sein.

In Fig. 5 zeigt im Detail eine vorteilhafte Beschaltung eines solchen gesteuerten Linearreglers für den ersten Zweig Z₁, wobei zusätzlich Widerstände R1₁, R2₁ in Kombination mit einem Kondensator C1₁ zur Kompensation dienen bzw. die hochfrequent modulierende Stromregelschleife stabilisieren.

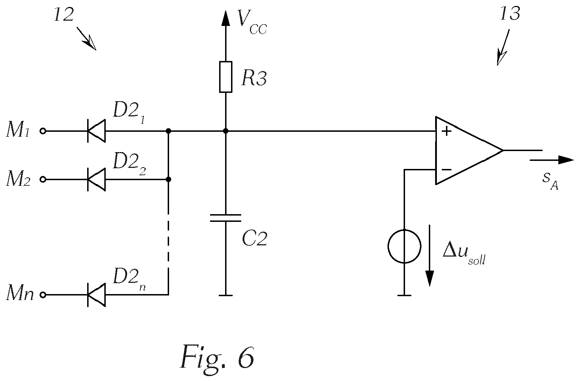

Fig. 6 zeigt eine detaillierte Ausführung der Auswerteschaltung 12. Diese greift wie in Fig. 4 ersichtlich zwischen den Modulationsstufen 11₁, 11₂, ...11ₙ und den Laserdioden LD1, LD2, ...LDn die Spannung ab, die somit der an den Modulationsstufen 11₁, 11₂, ...11ₙ abfallenden Spannung Δux1, Δux2, ...Δuxₙ entspricht. Der nachfolgende Regelstufe 13 wird an einem Eingang diese Auswerteschaltung 12 zugeschaltet und am zweiten Eingang der minimal benötigte Spannungsabfall Δuₛₒₗₗ vorgegeben. Die Auswerteschaltung 12 besteht aus einer Anzahl an Dioden D2₁, D2₂, ...D2ₙ, wobei die Anzahl der Anzahl der Modulationsstufen 11₁, 11₂, ...11ₙ entspricht, und einem Pull-up Widerstand R3, wobei die Kathode jeder Diode zwischen der Laserdiode und der zugeordneten Modulationsstufe im jeweiligen Zweig Z₁...Zₙ angeschlossen ist. Die Dioden D2₁, D2₂, ...D2ₙ sind vorteilhafter Weise als Schottky-Dioden ausgebildet. Der Pull-Up Widerstand ist mit einer Hilfsspannung Vcc verbunden die vorteilhafter Weise durch die Ausgangsspannung U_{A} der regelbaren Spannungsquelle 10 gebildet wird. Weiters ist der Auswerteschaltung 12 am Ausgang ein Kondensator C2 zugeordnet. Die Auswerteschaltung führt der Regelstufe 13 den Spannungsabfall jener Modulationsstufe zu, in deren Strang die Laserdiode den höchsten Spannungsabfall aufweist, da damit die an der Modulationsstufe anliegende Spannung den geringsten Wert im Vergleich zu den anderen Modulationsstufen aufweist. Die Regelstufe 13 gibt daher ein Signal s_{A} ab, das als Stellgröße für die Spannungsregelung der regelbaren Spannungsquelle 10 dient. Vorteilhafterweise ist die Regelstufe 13 als integrierendes Regelglied oder als Regelglied mit einem integrierenden Anteil ausgebildet. Weiters kann die Regelstufe 13 auch in Form eines Mikrocontrollers ausgeführt sein und damit softwaretechnisch als Regler agieren, um ein Signal für die regelbare Spannungsquelle 10 abzugeben.

Die Regelstufe 13 veranlasst beispielsweise bei einem Absinken der Spannung Δux1, Δux2, ...Δuxₙ an einer Modulationsstufe 11₁, 11₂, ...11ₙ unter einen vorgegebenen Sollwert Δuₛₒₗₗ die regelbare Spannungsquelle 10 dazu die Ausgangsspannung U_{A} zu erhöhen. Bekannte übliche Regelungen der Ausgangsspannung einer solchen regelbaren Spannungsquelle, bei der beispielsweise eine zur Ausgangsspannung U_{A} proportionale Größe, die über einen Spannungsteiler gebildet wird, verwendet wird, können mit der Erfindung einfach kombiniert werden.

Infolge einer offenen Last in einem der Zweige Z₁...Zₙ würde die Modulationsstufe 11₁...11ₙ im betroffenen Zweig einen Spannungsabfall Δuₓ₁, .....Δuₓₙ aufweisen der gegen Null geht, womit dieser Spannungsabfall über die Auswerteschaltung 12 der Regelstufe 13 zugeführt wird, die daraufhin ein Signal abgibt welches einem, auf eine offen Last hinweisenden, Fehlersignal entspricht. Beispielsweise könnte das Fehlersignal durch einen erhöhten Spannungswert am Ausgang der Regelstufe 13 definiert sein.

Die gezeigten Elemente stellen gemeinsam nur beispielhafte Ausführungen dar, die im vorliegenden Fall jedenfalls kostengünstige und zugleich auch effiziente Lösungen sind und somit in Verbindung mit der beschriebenen Erfindung besondere Vorteile aufweisen.

Auch liegt die Wahl der ergänzenden Schaltelemente in der Hand des ausführenden Fachmanns, wobei beispielsweise weiterführende Filterelemente und Schutzelemente möglich, jedoch der Übersichtlichkeit halber nicht gezeigt sind.

**Liste der Bezugszeichen**

| | | | |
|---|---|---|---|
| 1 | Laserscansystem | C1 | Speicherkondensator |
| 2 | Ablenkelement | C3, C4 | Kondensator |
| 3a | Laserdiode | D2₁...D2ₙ | Dioden |
| 3b | Laserdiode | D3 | Zenerdiode |
| 3c | Laserdiode | Δuₓ₁, .....Δuₓₙ | Spannungsabfall |
| 4 | Konversionselement | Δuₛₒₗₗ | Sollwert |
| 5 | Projektionsmittel | ΔUₓᵢₘᵢₙ | Minimalwert |
| 6 | Laserscansystem | I_{G} | Gesamtstrom |
| 7 | Ablenkelement | I₁....In | Strom |
| 8a | Laserdiode | L | Längsinduktivität |
| 8b | Laserdiode | LD₁, LD_{2,} ...LDₙ | Laserdiode |
| 8c | Laserdiode | R3 | Pull-Up Widerstand |
| 9 | Optiksystem | R_{S1}, R_{S2},...R_{Sn} | Stromsensor |
| 10 | Spannungsquelle | s_{A} | Ausgangssignal |
| 11₁, 11₂, ..11ₙ | Modulationsstufe | s_{S} | Steuersignal |
| 12₁, 12₂,...12ₙ | Auswerteschaltung | T1 | Schalter |
| 13 | Regelstufe | T3_{1,} T3₂,...T3ₙ | MOSFET |
| 14₁, 14₂...14ₙ | Operationsverstärker | U_{A} | Ausgangsspannung |
| | | U_{E} | Versorgungsspannung |
| | | Z₁...Zₙ | Zweige |

## Patentansprüche

1. Kraftfahrzeug-Beleuchtungseinrichtung mit zumindest zwei Halbleiterlichtquellen zum Erzeugen einer Lichtverteilung, bei welchem eine der Beleuchtungseinrichtung zugeordnete Schaltungsanordnung zum Ansteuern von zumindest zwei Modulationszweigen (Z₁...Zₙ) für Halbleiterlichtquellen (LD1....LDn) vorgesehen ist, wobei jeder Zweig zumindest eine Halbleiterlichtquelle aufweist, die in Serie mit einer Modulationsstufe (11₁, 11₂, ...11ₙ) liegt, welche den Strom im jeweiligen Zweig moduliert, und die Zweige parallel an der Ausgangsspannung (U_{A}) einer gemeinsamen, elektronisch regelbaren Spannungsquelle (10) liegen, wobei
eine Auswerteschaltung (12) vorgesehen ist, welcher der Spannungsabfall (Δuₓ₁, .....Δuₓₙ) an der Modulationsstufe (11₁, 11_{2,} ...11ₙ) jedes Zweiges (Z₁...Zₙ) zugeführt ist, wobei die Auswerteschaltung dazu eingerichtet ist, den aktuellen Minimalwert (Δuₓₘᵢₙ) des Spannungsabfalls (Δuₓ₁, Δuₓₙ) einer Regelstufe (13) als Istwert zuzuführen, wobei der Regelstufe als Sollwert der minimal benötigte Spannungsabfall (Δuₛₒₗₗ) vorgegeben ist und das Ausgangssignal (s_{A}) der Regelstufe als Stellgröße für die Spannungsregelung der regelbaren Spannungsquelle (10) zugeführt ist,
**dadurch gekennzeichnet, dass** die Regelstufe (13) dazu eingerichtet ist, bei Unterschreiten eines vorgegebenen unteren Grenzwertes des Spannungsabfalls (Δuₓ₁, ..... Δuₓₙ) an einer Modulationsstufe (11₁, 11₂, ...11ₙ) ein, auf eine offene Last hinweisendes Fehlersignal abzugeben.

2. Kraftfahrzeug-Beleuchtungseinrichtung nach Anspruch 1, **dadurch gekennzeichnet, dass** jede Modulationsstufe (11₁, 11₂, ...11ₙ) als gesteuerte Linearregler mit einem Transistor (T3₁, T3₂,...T3ₙ) ausgebildet sind, dessen Eingang je von einem Operationsverstärker (14₁....14ₙ) angesteuert ist, wobei einem ersten Eingang jedes Operationsverstärkers das Signal eines in dem betreffenden Zweig liegenden Stromsensors (R_{S1}....R_{Sn}) und einem zweiten Eingang des Operationsverstärkers ein Modulationssignal (S_{S1}....S_{Sn}) zugeführt ist.

3. Kraftfahrzeug-Beleuchtungseinrichtung nach Anspruch 1 oder 2, **dadurch gekennzeichnet, dass** die Auswerteschaltung (12) aus einer Anzahl an Dioden (D2₁...D2ₙ) besteht, deren Anzahl der Anzahl der Modulationsstufen (11₁, 11_{2,} ...11ₙ) entspricht, wobei die Kathoden der jeweiligen Dioden (D2₁...D2ₙ) zwischen den Laserdioden (LD1....LDn) und den Modulationsstufen (11₁, 11₂, ...11ₙ) im jeweiligen Zweig (Z₁...Zₙ) angeschlossen sind und den Anoden der Dioden (D2₁...D2ₙ) über einen gemeinsamen Pull-Up Widerstand (R3) eine Hilfsspannung (Vcc) zugeführt ist und die Anoden gemeinsam mit einem Kondensator (C2) auf Masse geschaltet sind.

4. Kraftfahrzeug-Beleuchtungseinrichtung nach Anspruch 3, **dadurch gekennzeichnet, dass** die Hilfsspannung (Vcc) durch die Ausgangsspannung (U_{A}) der regelbaren Spannungsquelle gebildet wird.

5. Kraftfahrzeug-Beleuchtungseinrichtung nach Anspruch 1, **dadurch gekennzeichnet, dass** das Fehlersignal der regelbaren Spannungsquelle (10) als Abschaltsignal für die Ausgangsspannung (U_{A}) zugeführt ist.

6. Kraftfahrzeug-Beleuchtungseinrichtung nach Anspruch 2, **dadurch gekennzeichnet, dass** der Transistor (T3₁, T3₂,...T3ₙ) ein MOSFET ist.

7. Kraftfahrzeug-Beleuchtungseinrichtung nach einem der Ansprüche 1 bis 6, **dadurch gekennzeichnet, dass** die elektronisch regelbare Spannungsquelle (10) ein DC/DC-Konverter ist.

8. Kraftfahrzeug-Beleuchtungseinrichtung nach einem der Ansprüche 1 bis 7, **dadurch gekennzeichnet, dass** die zumindest zwei Halbleiterlichtquellen (LD1....LDn) Laserdioden sind.
